# EUROPÄISCHE PATENTSCHRIFT

(11) **EP 3 815 964 B1**
(45) Veröffentlichungstag und Bekanntmachung des Hinweises auf die Patenterteilung: **15.03.2023**
(21) Anmeldenummer: 20203404.7
(22) Anmeldetag: 22.10.2020
(51) Int. Cl.: B60N 2/22, B60N 2/02

(54) **FAHRZEUGSITZ**
VEHICLE SEAT
SIÈGE DU VÉHICULE

(30) Priorität: 29.10.2019 DE 102019129174
(43) Veröffentlichungstag der Anmeldung: 05.05.2021
(73) Patentinhaber: GRAMMER AG, 92289 Ursensollen (DE)
(72) Erfinder: Haller, Erwin, 92262 Birgland (DE)
(74) Vertreter: Hannke, Christian

(56) Entgegenhaltungen:
- DE-A1- 4 405 653
- DE-U1-202012 003 009
- US-A1- 2010 308 167

## Beschreibung

Die Erfindung betrifft einen Fahrzeugsitz umfassend eine Rückenlehne, ein Sitzteil und ein mit dem Sitzteil verbundenes und relativ zu dem Sitzteil verlagerbaren Sitzteiloberteil, wobei die Rückenlehne drehbar um eine erste Drehachse mit dem Sitzteil verbunden ist.

Es sind aus dem Stand der Technik derartige Fahrzeugsitze bekannt, wobei die Einstellungen der Rückenlehnenneigung und der Sitzoberteilposition unabhängig voneinander einstellbar sind. Bei einer Veränderung der Rückenlehnenneigung tritt die Problematik auf, dass sich durch die Veränderung der Rückenlehnenneigung auch die Position des SIP-Punkt bzw. der H-Punkt des Fahrzeugsitzes verändert, insbesondere nach vorne bei einer Veränderung der Rückenlehnenneigung nach hinten, das heißt, dass der nutzbare Platz auf dem Sitzteiloberteil sich verringert. Um dies korrigieren zu können, ist es notwendig, dass das Sitzteiloberteil entsprechend der Änderung der Rückenlehnenneigung angepasst wird. Die DE202012003009U zeigt einen Fahrzeugsitz bei dem die Drehung der Rückenlehne zu einer Verschiebung des Sitzbodens führt.

Es ist daher Aufgabe der vorliegenden Erfindung, einen Fahrzeugsitz bereitzustellen, mittels welchem es möglich ist, durch eine synchrone Änderung der Sitzteiloberteilposition bei einer Änderung der Rückenlehnenneigung keine Änderung des SIP-Punkts bzw. H-Punkts hervorgerufen wird.

Die Aufgabe wird gelöst durch einen Fahrzeugsitz mit den Merkmalen des Anspruchs 1.

Das heißt, dass bei einer Drehung der Rückenlehne um die erste Drehachse synchron bzw. simultan das Sitzteiloberteil verlagert wird. Dadurch kann verhindert werden, dass die Position des SIP-Punkts bzw. des H-Punkts des Fahrzeugsitzes verändert wird und der Fahrer eine andere Sitzposition einnehmen muss.

Insbesondere wird die Position des Sitzteiloberteils automatisch eingestellt aufgrund der Drehung der Rückenlehne.

Dabei ist erfindungsgemäß das Sitzteiloberteil in einer Fahrzeugsitzlängsrichtung translatorisch verlagerbar

Mit einer Verlagerung in Fahrzeugsitzlängsrichtung ist insbesondere eine Verlagerung in Fahrzeugsitzlängsrichtung nach vorne oder nach hinten zu verstehen.

Erfindungsgemäß sind die Rückenlehne und das Sitzteiloberteil mittels eines ersten Hebelelements verbunden, welches drehbar um eine zweite Drehachse mit der Rückenlehne und drehbar um eine dritte Drehachse mit dem Sitzteiloberteil verbunden ist.

Mittels einer derartigen Ausgestaltung, das heißt mittels des ersten Hebelelements, sind die Rückenlehne und das Sitzteiloberteil derart miteinander verbunden, so dass durch die Drehung der Rückenlehne über das erste Hebelelement die Drehung der Rückenlehne in eine Verlagerung des Sitzteiloberteils übersetzt werden kann.

Gemäß einer nicht erfindungsgemäßen Ausführungsform ist es vorgesehen, dass die Rückenlehne und das Sitzteiloberteil mittels eines ersten Hebelelements und eines zweiten Hebelelements verbunden sind, welche drehbar um eine zweite Drehachse mit der Rückenlehne und drehbar um eine dritte Drehachse mit dem Sitzteiloberteil verbunden ist.

Die Anordnung des ersten Hebelelements und gegebenenfalls des zweiten Hebelelements in Relation zu Rückenlehne und Sitzteiloberteil können im Wesentlichen beliebig sein.

Bei der Ausführungsform, bei welcher lediglich ein erstes Hebelelement vorgesehen ist, ist es vorteilhaft, dass das erste Hebelelement mittig hinsichtlich der Rückenlehne und des Sitzteiloberteils angeordnet ist, bezüglich einer Fahrzeugsitzbreitenrichtung, so dass die Gefahr einer Verkeilung des Sitzteiloberteils verringert werden kann.

Bei der nicht erfindungsgemäßen Ausführungsform mit einem ersten Hebelelement und einem zweiten Hebelelement ist es vorteilhaft, wenn die Hebelelemente in Fahrzeugsitzbreitenrichtung gesehen an einem distalen Ende und proximalen Ende angeordnet sind, oder in Fahrzeugsitzlängsrichtung gesehen links und rechts an den Enden der Rückenlehne und des Sitzteiloberteils.

Gemäß einer weiteren bevorzugten Ausführungsform ist es vorgesehen, dass in einer Fahrzeugsitzhöhenrichtung gesehen die erste Drehachse über der zweiten Drehachse angeordnet ist. Bevorzugt ist die zweite Drehachse in Fahrzeugsitzhöhenrichtung über der dritten Drehachse angeordnet.

Insbesondere durch die Anordnung der zweiten Drehachse über der dritten Drehachse kann ein Totpunkt der Hebelelemente verhindert werden.

Gemäß einer besonders bevorzugten Ausführungsform ist das erste Hebelelement in einem ersten Winkel zu einer Fahrzeugsitzlängsrichtung angeordnet, wobei der erste Winkel sich während der Drehung der Rückenlehne verändert, wobei bevorzugt der erste Winkel einen Wert von größer als 90° und kleiner als 180°, bevorzugter größer als 100° und kleiner als 175° und besonders bevorzugt größer als 150° und kleiner als 170° ist.

Gleiches gilt ebenso für das zweite Hebelelement. Die Ausführungen hinsichtlich des ersten Hebelelements gelten in analoger Weise auch im Wesentlichen für das zweite Hebelelement. Gemäß einer weiteren bevorzugten Ausführungsform ist eine Verbindungslinie zwischen der ersten Drehachse und der zweiten Drehachse in einer ersten Position der Rückenlehne zu dem Sitzteil in einem ersten Drehwinkel zu einer Fahrzeugsitzhöhenrichtung und in einer zweiten Position der Rückenlehne zu dem Sitzteil in einem zweiten Drehwinkel zu der Fahrzeugsitzhöhenrichtung angeordnet, wobei bevorzugt der erste Drehwinkel größer als 0° ist und der zweite Drehwinkel größer als 10° ist.

Durch den ersten und zweiten Drehwinkel kann dabei eine Neigung der Rückenlehne definiert sein, nämlich durch 90° - erster/zweiter Drehwinkel. Besonders bevorzugt kann der erste Drehwinkel 5° und der zweite Drehwinkel 30° oder mehr betragen.

Gemäß einer nicht erfindungsgemäßen Ausführuungsform sind das erste Hebelelement und das zweite Hebelelement identisch ausgebildet und ebenso in gleicher Art und Weise hinsichtlich der Rückenlehne und dem Sitzteiloberteil angeordnet.

Weiter gemäß einer bevorzugten Ausführungsform ist es vorgesehen, dass die Rückenlehne ein erstes Verbindungselement umfasst, mittels welchem das erste Hebelelement mit der Rückenlehne drehbar verbunden ist, und wobei das Sitzteiloberteil ein zweites Verbindungselement umfasst, mittels welchem das erste Hebelelement mit dem Sitzteiloberteil drehbar verbunden ist.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit der Zeichnung zu entnehmen. Hierbei zeigen:
- Fig. 1A: einen Fahrzeugsitz in einer schematischen Darstellung in einer ersten Position gemäß dem Stand der Technik;
- Fig. 1B: den Fahrzeugsitz der Figur 1A in einer zweiten Position;
- Fig. 2A: einen erfindungsgemäße Fahrzeugsitz in einer schematischen Darstellung in einer ersten Position;
- Fig. 2B: den Fahrzeugsitz gemäß Figur 2A in einer zweiten Position;
- Fig. 3A: den Fahrzeugsitz gemäß einer bevorzugten Ausführungsform in einer Schnittdarstellung in der ersten Position;
- Fig. 3B: den Fahrzeugsitz gemäß der Figur 3A in der zweiten Position;
- Fig. 4A: den Fahrzeugsitz gemäß einer bevorzugten Ausführungsform in einer perspektivischen Ansicht in der ersten Position;
- Fig. 4AA: Vergrößerung eines Ausschnitts der Figur 4A;
- Fig. 4B: den Fahrzeugsitz gemäß einer bevorzugten Ausführungsform in einer perspektivischen Ansicht in der zweiten Position;
- Fig. 4BB: Vergrößerung eines Ausschnitts der Figur 4B.

Zur Übersichtlichkeit können Elemente in manchen Figuren keine Bezugszeichen aufweisen, die in anderen Figuren bereits bezeichnet worden sind.

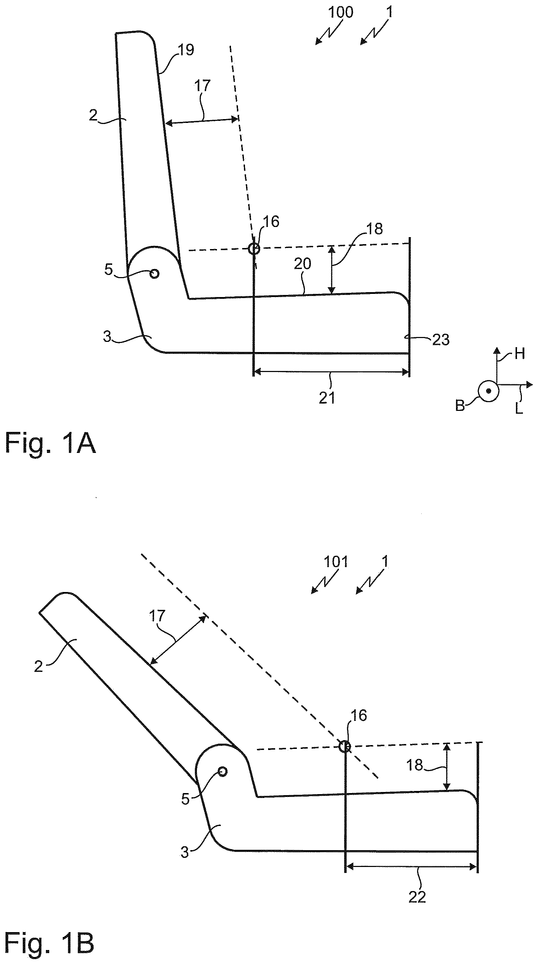

Die Figuren 1A und 1B zeigen die Situation aus dem Stand der Technik in einer schematischen Darstellung, im Vergleich zu der Situation gemäß eines erfindungsgemäßen Fahrzeugsitzes 1 der vorliegenden Anmeldung, ebenfalls in einer schematischen Darstellung.

Bei dem vorliegenden Fahrzeugsitz 1 gemäß dem Stand der Technik, dargestellt in den Figuren 1A und 1B, weist der Fahrzeugsitz 1 eine Rückenlehne 2 und ein Sitzteil 3 auf, wobei die Rückenlehne 2 um eine erste Drehachse 5 gegenüber dem Sitzteil 2 drehbar ist, wobei die Rückenlehne 2 mit dem Sitzteil 2 drehbar verbunden ist.

Ein SIP-Punkt 16 bzw. ein H-Punkt 16, welche im nachfolgenden synonym verstanden werden, kann ermittelt werden durch einen SRP-Punkt, also ein Schnittpunkt einer Rückenlehnenfläche 19 und einer Sitzfläche 20, welcher durch Normen geregelt die Lage des SIP-Punkts 16 ergibt.

Der SIP-Punkt 16 hat somit einen ersten Abstand 17 von der Rückenlehnenfläche 19 und einen zweiten Abstand 18 von der Sitzfläche 20.

Um die zur Verfügung stehende Sitzfläche für einen Person darzustellen, ist insbesondere ein dritter Abstand 21 entscheidend, welche die Länge von dem SIP-Punkt zu einer vorderen Stirnfläche 23 des Sitzteils 3 beschreibt, in Fahrzeugsitzlängsrichtung L gesehen.

Der Fahrzeugsitz 1 der Figur 1A ist dabei in einer ersten Position 100 dargestellt, welche definiert sein kann durch eine Drehstellung der Rückenlehne 2 relativ zu dem Sitzteil 2, und zwar einer maximalen Drehstellung der Rückenlehne 2 mit Drehrichtung in Fahrzeugsitzlängsrichtung L nach vorne.

Der Fahrzeugsitz der Figur 1B ist dabei in einer zweiten Position 101 dargestellt, welche definiert sein kann durch eine Drehstellung der Rückenlehne 2 relativ zu dem Sitzteil 2, und zwar einer maximalen Drehstellung der Rückenlehne 2 mit Drehrichtung in Fahrzeugsitzlängsrichtung L nach hinten.

Die Rückenlehne 2 des Fahrzeugsitzes 1 in der zweiten Position 101 wurde in Fahrzeugsitzlängsrichtung L gesehen maximal nach hinten gedreht. Da der erste Abstand 17 und der zweite Abstand 18 gleich bleiben, verschiebt sich der SIP-Punkt 16 in Fahrzeugsitzlängsrichtung L nach vorne, so dass ein vierter Abstand 22 zwischen SIP-Punkt 16 und der vorderen Stirnfläche 23 eingestellt ist, wobei der vierte Abstand 22 kleiner ist als der dritte Abstand 21, so dass die zur Verfügung stehende Sitzfläche reduziert ist.

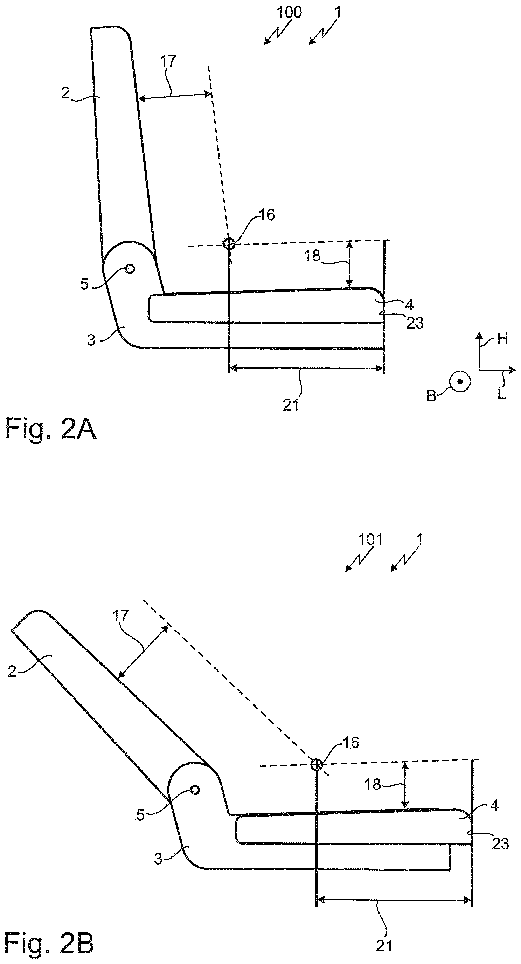

In der Figur 2A ist der Fahrzeugsitz 1 in der ersten Position 100 und in der Figur 2A in der zweiten Position 2B dargestellt.

Weiter umfasst der Fahrzeugsitz 1 ein Sitzteiloberteil 4, welches relativ zu dem Sitzteil 3 verlagerbar ist, und zwar in Abhängigkeit der Drehstellung der Rückenlehne 2 relativ zu dem Sitzteil 3.

Die Position des SIP-Punkts 16 in der Figur 2A entspricht der Position des SIP-Punkts in der Figur 1A. Jedoch unterscheidet sich die Position des SIP-Punkts 16 in der Figur 2A von der Position in der Figur 1A.

Wie im Vergleich der Figuren 2A und 2B zu erkennen ist, ist in der Figur 2B das Sitzteiloberteil 4 relativ zu dem Sitzteil 3 verlagert, insbesondere derart, dass der dritte Abstand 21 im Wesentlichen beibehalten wird, das heißt, dass sich die verfügbare Sitzfläche nicht ändert bei einer Drehung der Rückenlehne 2 um die erste Drehachse 5.

Es sei darauf hingewiesen, dass die vordere Stirnfläche 23 als ein Teil des Sitzteiloberteils 4 anzusehen ist.

Weiter ist es natürlich vorstellbar, dass der Fahrzeugsitz 1 Zwischenpositionen zwischen der ersten Position 100 und der zweiten Position 101 einnehmen kann, das heißt, dass der Drehwinkel zwischen dem maximalen Drehwinkel nach vorne und dem maximalen Drehwinkel nach hinten liegt. Die Verlagerung des Sitzteiloberteils 4 ist entsprechend.

In den nachfolgenden Figuren wird die genauere Ausgestaltung des Fahrzeugsitzes 1 näher dargestellt.

Die Rückenlehne 2 weist einen Rückenlehnenrahmen 2` auf, das Sitzteil 3 einen Sitzteilrahmen 3` und das Sitzteiloberteil 4 einen Sitzteiloberteilrahmen 4`. Die Rückenlehne 2, das Sitzteil 3 und das Sitzteiloberteil 4 können vorzugsweise noch Bezüge und/oder Polster aufweisen.

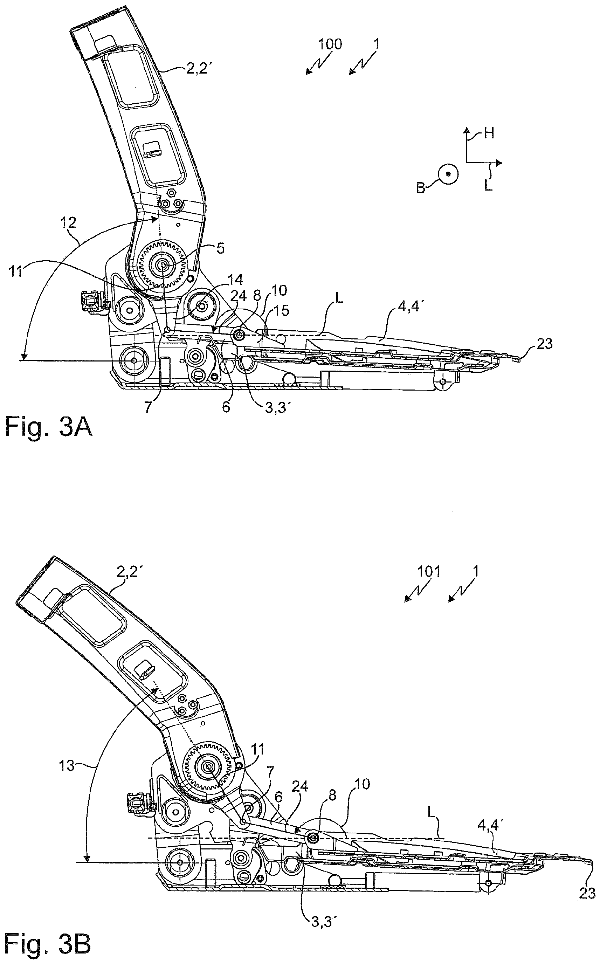

In den Figuren 3A und 3B ist der Fahrzeugsitz 1 gemäß einer bevorzugten Ausführungsform in einer Schnittdarstellung in einer Seitenansicht dargestellt, wobei zu erkennen ist, dass die Rückenlehne 2 ein erstes Verbindungselement 14 und das Sitzteiloberteil 4 ein zweites Verbindungselement 15 umfassen.

Weiter ist ein erstes Hebelelement 6 erkennbar, welches einerseits drehbar um eine zweite Drehachse 7 mit der Rückenlehne 2, insbesondere dem ersten Verbindungselement 14, verbunden ist, und andererseits drehbar um eine dritte Drehachse 8 mit dem Sitzteiloberteil 4, insbesondere mit dem zweiten Verbindungselement 15 verbunden ist.

Weiter ist den Figuren 3A und 3B zu entnehmen, dass das erste Hebelelement 6 in einem ersten Winkel 10 zu der Fahrzeugsitzlängsrichtung L angeordnet ist, wobei der erste Winkel 10 verschiedene Werte annehmen kann, abhängig von dem Drehwinkel der Rückenlehne 2 relativ zu dem Sitzteil 3. Der erste Winkel 10 ist dabei kleiner als 180°, so dass ein Totpunkt der Hebelmechanik vermieden werden kann.

Die Beziehung zwischen dem Drehwinkel und dem ersten Winkel 10 ist dabei derart, dass wenn sich der Drehwinkel verkleinert, der erste Winkel 10 sich vergrößert.

Insbesondere ist eine zweite Verbindungslinie 24, welche zu dem ersten Hebelelement 6 zugehörig ist und definiert ist als Verbindung zwischen der zweiten Drehachse 7 und der dritten Drehachse 8, in dem ersten Winkel 10 zu der Fahrzeugsitzlängsrichtung L angeordnet.

Die Form des ersten Hebelelements 6 kann prinzipiell beliebig sein, wobei es bevorzugt ist, dass das erste Hebelelement 6 länglich erstreckend ausgebildet ist.

Besonders bevorzugt ist, jeweils in Fahrzeugsitzhöhenrichtung H gesehen, die zweite Drehachse 7 unter der ersten Drehachse 5 und die dritte Drehachse 8 unter der zweiten Drehachse 7 angeordnet. Dies führt insbesondere dazu, dass das Hebelelement 6 in dem ersten Winkel 10 zu der Fahrzeugsitzlängsrichtung L angeordnet ist.

Weiter kann der Drehwinkel der Rückenlehne 2 relativ zu dem Sitzteil 3 definiert sein als ein Winkel zwischen einer ersten Verbindungslinie 11 und der Fahrzeugsitzlängsrichtung L, wobei die erste Verbindungslinie 11 definiert ist als Verbindungslinie zwischen der ersten Drehachse 5 und der zweiten Drehachse 7.

Die zweite Drehachse 7 ist hinsichtlich der Rückenlehne 2 derart angeordnet, insbesondere mittels des ersten Verbindungselements 14, dass bei einer Drehung der Rückenlehne 2 nach hinten in Fahrzeugsitzlängsrichtung L gesehen sich die zweite Drehachse 7 in Fahrzeugsitzlängsrichtung nach vorne dreht, das heißt, dass die zweite Drehachse 7 in Fahrzeugsitzlängsrichtung L nach vorne und in Fahrzeugsitzhöhenrichtung H nach oben verlagert wird.

Durch diese Verlagerung der zweiten Drehachse 7 wird mittels des ersten Hebelelements 6 eine Verlagerung des Sitzteiloberteils 4 nach vorne bewirkt.

Gleiches gilt ebenso bei einer Drehung der Rückenlehne 2 nach vorne, so dass die zweite Drehachse 7 in Fahrzeugsitzlängsrichtung L nach hinten und Fahrzeugsitzhöhenrichtung H nach unten verlagert wird, entsprechend einer Drehung nach hinten, wodurch das Sitzteiloberteil 4 nach hinten, in Fahrzeugsitzlängsrichtung L gesehen, verlagert wird.

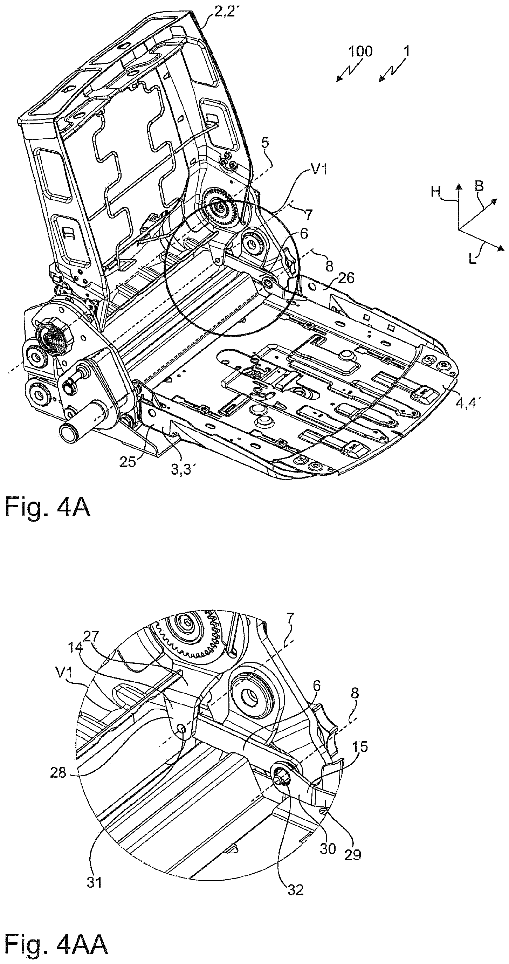

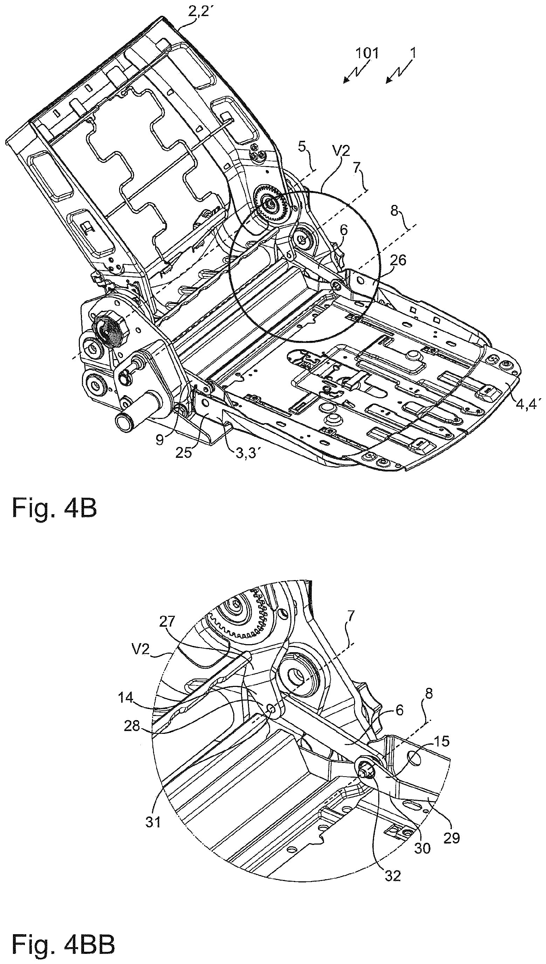

In den Figuren 4A, 4AA, 4B und 4BB ist der Fahrzeugsitz 1 gemäß einer bevorzugten Ausführungsform in perspektivischen Ansichten und zugehörigen Vergrößerungen dargestellt.

Insbesondere sind eine erste Seitenwand 25 und eine zweite Seitenwand 26 des Sitzteils 3, insbesondere des Sitzteilrahmens 3`, welche sich vorzugsweise in Fahrzeugsitzlängsrichtung L und Fahrzeugsitzhöhenrichtung H erstrecken und in Fahrzeugsitzbreitenrichtung B gesehen an einem proximalen und einem distalen Ende des Sitzteils 3 angeordnet sind.

Die Seitenwände 25, 26 sind dabei derart, dass die Seitenwände 25, 26 das Sitzteiloberteil 4, insbesondere den Sitzteiloberteilrahmen 4` in Fahrzeugsitzlängsrichtung L führen, bei einer Verlagerung des Sitzteiloberteils 4.

In der Figur 4AA ist die Vergrößerung des Bereichs V1 der Figur 4A zu erkennen. Insbesondere wird auf die Ausgestaltung des Hebelmechanismus Bezug genommen.

Wie der Vergrößerung V1 zu entnehmen ist, ist ein erstes Verbindungselement 14 und ein zweites Verbindungselement 15 zu erkennen. Das erste Hebelelement 6 ist dabei drehbar um die zweite Drehachse 7 mit dem Sitzteiloberteil 4, insbesondere mit dem ersten Verbindungselement 14, und drehbar um die dritte Drehachse 8 mit dem Sitzteiloberteil 4, insbesondere mit dem zweiten Verbindungselement 15 drehbar verbunden.

Das erste Verbindungselement 14 ist starr mit der Rückenlehne 2 verbunden und weist vorzugsweise einen ersten Abschnitt 27 und einen zweiten Abschnitt 28 auf. Der erste Abschnitt 27 verläuft bevorzugt in der Fahrzeugsitzbreitenrichtung B und in der Fahrzeugsitzhöhenrichtung, also insgesamt gesehen in einem Winkel zu der Fahrzeugsitzhöhenrichtung H.

Das zweite Verbindungselement 15 weist einen dritten Abschnitt 29 und einen vierten Abschnitt 30 auf, wobei bevorzugt der dritte Abschnitt 29 sich in Fahrzeugsitzbreitenrichtung B und in Fahrzeugsitzlängsrichtung L erstreckt, also in einem Winkel zu der Fahrzeugsitzlängsrichtung L. Der vierte Abschnitt 30 erstreckt sich insbesondere in Fahrzeugsitzlängsrichtung L derart, dass die Haupterstreckung parallel zu der Fahrzeugsitzlängsrichtung L ist.

Besonders bevorzugt ist das erste Hebelelement 6 mittels eines ersten Wellenstücks 31 mit der Rückenlehne 2 und mittels eines zweiten Wellenstücks 32 mit dem Sitzteiloberteil 4 drehbar verbunden.

Die Figur 4B zeigt den Fahrzeugsitz 1 der Figur 4A in der zweiten Position 101 und entsprechend zeigt der Ausschnitt V2 der Figur 4A, dargestellt in der Figur 4AA, die entsprechend bewegte Hebelanordnung.

Weiter ist den Figuren 4A und 4B ein zweites Hebelelement 9 zu entnehmen. Die Ausführungen betreffend das erste Hebelelement 6 gelten in analoger Weise auch für das zweite Hebelelement 9. Insbesondere ist das zweite Hebelelement 9 zu dem ersten Hebelelement gespiegelt angeordnet, aber mit den gleichen Elementen. Weiter sind das erste Hebelelement 6 und das zweite Hebelelement identisch ausgebildet.

### Bezugszeichenliste

- 1: Fahrzeugsitz
- 2: Rückenlehne
- 3: Sitzteil
- 4: Sitzteiloberteil
- 5: erste Drehachse
- 6: erstes Hebelelement
- 7: zweite Drehachse
- 8: dritte Drehachse
- 9: zweites Hebelelement
- 10: erster Winke
- 11: Verbindungslinie
- 12: erster Drehwinkel
- 13: zweiter Drehwinkel
- 14: erstes Verbindungselement
- 15: zweites Verbindungselement
- 16: SIP-Punkt
- 17: erster Abstand
- 18: zweiter Abstand
- 19: Rückenlehnenfläche
- 20: Sitzfläche
- 21: dritter Abstand
- 22: vierter Abstand
- 23: vordere Stirnfläche
- 24: zweite Verbindungslinie
- 25: erste Seitenwand
- 26: zweite Seitenwand
- 27: erster Abschnitt
- 28: zweiter Abschnitt
- 29: dritter Abschnitt
- 30: vierter Abschnitt
- 31: erstes Wellenstück
- 32: zweites Wellenstück
- 100: erste Position
- 101: zweite Position
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) umfassend eine Rückenlehne (2), ein Sitzteil (3) und ein mit dem Sitzteil (3) verbundenes und relativ zu dem Sitzteil (3) verlagerbaren Sitzteiloberteil (4), wobei die Rückenlehne (2) drehbar um eine erste Drehachse (5) mit dem Sitzteil (3) verbunden ist,
wobei die Rückenlehne (2) und das Sitzteiloberteil (4) miteinander derart verbunden sind, dass bei einer Drehung der Rückenlehne (2) um die erste Drehachse (5) das Sitzteiloberteil (4) relativ zu dem Sitzteil (3) verschoben wird, wobei das Sitzteiloberteil (4) in einer Fahrzeugsitzlängsrichtung (L) ausschließlich translatorisch verlagerbar ist und die Rückenlehne (2) und das Sitzteiloberteil (4) mittels lediglich eines ersten Hebelelements (6) verbunden sind, welches drehbar um eine zweite Drehachse (7) mit der Rückenlehne (2) und drehbar um eine dritte Drehachse (8) mit dem Sitzteiloberteil (4) verbunden ist.

2. Fahrzeugsitz (1) nach Anspruch 1,
**dadurch gekennzeichnet, dass**
in einer Fahrzeugsitzhöhenrichtung (H) gesehen die erste Drehachse (5) über der zweiten Drehachse (7) und die zweite Drehachse (7) über der dritten Drehachse (8) angeordnet ist.

3. Fahrzeugsitz (1) nach einem der Ansprüche 1 bis 2,
**dadurch gekennzeichnet, dass**
das erste Hebelelement (6) in einem ersten Winkel (10) zu einer Fahrzeugsitzlängsrichtung (L) angeordnet ist, wobei der erste Winkel (10) sich während der Drehung der Rückenlehne (2) verändert, wobei bevorzugt der erste Winkel (10) einen Wert von größer als 90° und kleiner als 180°, bevorzugter größer als 100° und kleiner als 175° und besonders bevorzugt größer als 150° und kleiner als 170° ist.

4. Fahrzeugsitz (1) nach einem der Ansprüche 1 bis 3,
**dadurch gekennzeichnet, dass**
eine Verbindungslinie (11) zwischen der ersten Drehachse (5) und der zweiten Drehachse (7) in einer ersten Position der Rückenlehne (2) zu dem Sitzteil (3) in einem ersten Drehwinkel (12) zu einer Fahrzeugsitzhöhenrichtung (H) und in einer zweiten Position der Rückenlehne (2) zu dem Sitzteil (3) in einem zweiten Drehwinkel (13) zu der Fahrzeugsitzhöhenrichtung (H) angeordnet sind, wobei bevorzugt der erste Drehwinkel (12) größer als 0° ist und der zweite Drehwinkel (13) größer als 10° ist.

5. Fahrzeugsitz (1) nach einem der Ansprüche 1 bis 4,
**dadurch gekennzeichnet, dass**
die Rückenlehne (2) ein erstes Verbindungselement (14) umfasst, mittels welchem das erste Hebelelement (6) mit der Rückenlehne (2) drehbar verbunden ist, und wobei das Sitzteiloberteil (4) ein zweites Verbindungselement (15) umfasst, mittels welchem das erste Hebelelement (6) mit dem Sitzteiloberteil (4) drehbar verbunden ist.

## Claims

1. Vehicle seat (1) comprising a backrest (2), a seat part (3) and a seat part upper portion (4) connected to the seat part (3) and displaceable relative to the seat part (3), the backrest (2) being connected to the seat part (3) in such a manner as to be rotatable about a first axis of rotation (5),
**characterised in that**
the backrest (2) and the seat part upper portion (4) are connected to one another in such a way that, when the backrest (2) is rotated about the first axis of rotation (5), the seat part upper portion (4) is displaced relative to the seat part (3), wherein the seat part upper portion (4) is only translationally displaceable in a vehicle seat longitudinal direction (L) and the backrest (2) and the seat part upper portion (4) are connected by means of only one first lever element (6), which is connected to the backrest (2) in such a manner as to be rotatable about a second axis of rotation (7) and connected to the seat part upper portion (4) in such a manner as to be rotatable about a third axis of rotation (8).

2. Vehicle seat (1) according to claim 1,
**characterised in that**
viewed in a vehicle seat height direction (H), the first axis of rotation (5) is arranged above the second axis of rotation (7) and the second axis of rotation (7) above the third axis of rotation (8).

3. Vehicle seat (1) according to any of claims 1 to 2,
**characterised in that**
the first lever element (6) is arranged at a first angle (10) to a vehicle seat longitudinal direction (L), the first angle (10) changing during the rotation of the backrest (2), the first angle (10) preferably having a value of greater than 90° and less than 180°, more preferably greater than 100° and less than 175° and particularly preferably greater than 150° and less than 170°.

4. Vehicle seat (1) according to any of claims 1 to 3,
**characterised in that**
a connecting line (11) between the first axis of rotation (5) and the second axis of rotation (7) is arranged in a first position of the backrest (2) relative to the seat part (3) at a first angle of rotation (12) relative to a vehicle seat height direction (H) and in a second position of the backrest (2) relative to the seat part (3) at a second angle of rotation (13) relative to the vehicle seat height direction (H), the first angle of rotation (12) preferably being greater than 0° and the second angle of rotation (13) greater than 10°.

5. Vehicle seat (1) according to any of claims 1 to 4,
**characterised in that**
the backrest (2) comprises a first connecting element (14) by means of which the first lever element (6) is rotatably connected to the backrest (2), and the seat part upper portion (4) comprising a second connecting element (15) by means of which the first lever element (6) is rotatably connected to the seat part upper portion (4).

## Revendications

1. Siège de véhicule (1) comportant un dossier (2), une partie assise (3) et une partie supérieure de partie assise (4) reliée à la partie assise (3) et apte à être déplacée par rapport à la partie assise (3), le dossier (2) étant relié à la partie assise (3) de manière à pouvoir tourner autour d'un premier axe de rotation (5), le dossier (2) et la partie supérieure de partie assise (4) étant reliés l'un à l'autre de telle sorte que, lors d'une rotation du dossier (2) autour du premier axe de rotation (5), la partie supérieure de partie assise (4) est déplacée par rapport à la partie assise (3), la partie supérieure de partie assise (4) étant apte à être déplacée en translation exclusivement dans une direction longitudinale (L) du siège de véhicule et le dossier (2) et la partie supérieure de partie assise (4) étant reliés au moyen simplement d'un premier élément levier (6), lequel est relié au dossier (2) de manière à pouvoir tourner autour d'un deuxième axe de rotation (7) et à la partie supérieure de partie assise (4) de manière à pouvoir tourner autour d'un troisième axe de rotation (8).

2. Siège de véhicule (1) selon la revendication 1,
**caractérisé par le fait que**,
vu dans une direction de la hauteur (H) du siège de véhicule, le premier axe de rotation (5) est disposé au-dessus du deuxième axe de rotation (7) et le deuxième axe de rotation (7) est disposé au-dessus du troisième axe de rotation (8).

3. Siège de véhicule (1) selon l'une des revendications 1 et 2,
**caractérisé par le fait que**
le premier élément levier (6) est disposé selon un premier angle (10) par rapport à une direction longitudinale (L) du siège du véhicule, le premier angle (10) variant pendant la rotation du dossier (2), de préférence le premier angle (10) ayant une valeur supérieure à 90° et inférieure à 180°, de façon davantage préférée supérieure à 100° et inférieure à 175°, et de manière particulièrement préférée supérieure à 150° et inférieure à 170°.

4. Siège de véhicule (1) selon l'une des revendications 1 à 3,
**caractérisé par le fait qu'**
une ligne de liaison (11) entre le premier axe de rotation (5) et le deuxième axe de rotation (7) est disposée dans une première position du dossier (2) par rapport à la partie assise (3) selon un premier angle de rotation (12) par rapport à une direction de la hauteur (H) du siège de véhicule et est disposée dans une deuxième position du dossier (2) par rapport à la partie assise (3) selon un second angle de rotation (13) par rapport à la direction de la hauteur (H) du siège de véhicule, de préférence le premier angle de rotation (12) étant supérieur à 0° et le second angle de rotation (13) étant supérieur à 10°.

5. Siège de véhicule (1) selon l'une des revendications 1 à 4,
**caractérisé par le fait que**
le dossier (2) comporte un premier élément de liaison (14) au moyen duquel le premier élément levier (6) est relié de manière rotative au dossier (2), et dans lequel la partie supérieure de partie assise (4) comporte un second élément de liaison (15) au moyen duquel le premier élément levier (6) est relié de manière rotative à la partie supérieure de partie assise (4).
